# EUROPEAN PATENT SPECIFICATION

(11) **EP 0 233 720 B1**
(45) Date of publication and mention of the grant of the patent: **09.06.1993**
(21) Application number: 87300844.5
(22) Date of filing: 30.01.1987
(51) Int. Cl.: H04N 7/01

(54) **Television signal - standard converting apparatus**
Vorrichtung zum Umsetzen der Norm eines Fernsehsignals
Dispositif convertisseur de standard pour un signal de télévision

(30) Priority: 19.02.1986 JP 34286/86
(43) Date of publication of application: 26.08.1987
(73) Proprietor: SONY CORPORATION, Tokyo 141 (JP)
(72) Inventor: Kubota, Tatsuya, Shinagawa-ku Tokyo (JP)
(74) Representative: Ayers, Martyn Lewis Stanley

(56) References cited:
- EP-A- 0 210 862
- US-A- 4 058 840
- US-A- 4 251 830
- US-A- 4 272 787
- PATENT ABSTRACTS OF JAPAN, vol. 8, no. 221 (E-271)[1658], 9th October 1984; & JP-A-59 104 866
- PATENT ABSTRACTS OF JAPAN, vol. 8, no. 149 (E-255)[1586], 12th July 1984; & JP-A-59 54 394
- INTERNATIONAL BROADCAST ENGINEER, vol. 6, no. 123-4, April/May 1975, pages 36,38,39,40, Whitton Press Ltd, Eton, Berks, GB; J.L.E. BALDWIN et al.: "DICE - a digital field rate television standards converter"

## Description

The invention relates to a standard converting apparatus and, more particularly, to a standard converting apparatus for converting a television signal such as that of a high definition television standard whose fields each have a large number of lines into a television signal such as that of the NTSC standard whose fields each have less lines.

The so-called high definition television (referred to hereunder simply as "HD") standard having 1125 lines and capable of reproduction of a high resolution picture has been proposed.

By adding the functions of reproducing a still picture of a desired scene and of slow reproduction to a standard converting apparatus for converting a television signal of the HD standard into that of the NTSC standard, there has been desired an apparatus for achieving reproduction of a still picture as well as for slow reproduction using a monitor of the NTSC standard with respect to a television signal sent in the HD standard.

In order to perform the reproduction of a still picture and slow reproduction, it is considered that data of one frame of a television signal are stored in a frame memory to permit the identical data to be read consecutively and at slower speed. However, since one frame of the television signal is made up of an odd field and an even field, double images can be reproduced in a moving picture when the still picture is reproduced by storing one frame of data.

Therefore, to execute the reproduction of the still picture and slow reproduction in the prior art, one field of a television signal is stored into a field memory and a picture of one frame is developed using data of that one field, so that two fields of identical data are read out consecutively.

If a one frame picture is developed using one field data as mentioned above, there is a problem that a distinct picture cannot be obtained because only one field of data is employed.

Patent Abstracts of Japan Volume 8 number 221 (JP-A-59 104 866) discloses an apparatus for converting a 1125 line HDTV signal into a NTSC signal using interfield processing.

US-A-4,272,787 discloses a freeze frame device for a PAL or NTSC signal involving the detection of motion between fields.

An object of the invention is, therefore, to provide a standard converting apparatus capable of reproduction of a distinct still picture as well as of slow reproduction.

According to the present invention, there is provided a standard converting apparatus for generating, from a first video signal which accords to a first television standard, a second video signal which accords to a second television standard and represents a still image, wherein the number of lines within one field of said first television standard is more than twice the number of lines within one field of said second television standard, characterised in that said converting apparatus comprises:
first line number conversion means supplied with either an odd or an even field of the first video signal for generating an odd-field video signal according to the second television standard;
second line number conversion means supplied with the same field of the first video signal as said first line number converting means for generating an even-field video signal according to the second television standard;
first memory means for storing an output of said first line number conversion means;
second memory means storing an output of said second line number conversion means; and
memory control means for controlling write and read operations of said first and second memory means so that the video signals stored in said first and second memory means are sequentially read out.

The above and other features and advantages of the present invention will be apparent from the following detailed description of an exemplary embodiment thereof when taken in conjunction with the accompanying drawings, in which:-
Fig. 1 is a block diagram of one embodiment of the invention;
Fig. 2 is a diagram for describing the operation of line number converters used in the embodiment;
Fig. 3 is a block diagram for showing an example of the line number converters; and
Figs. 4 and 5 are timing charts for describing the operation of the line number converters.

In the drawings, identical reference numerals denote identical structural elements.

One embodiment of the invention will be described hereunder referring to the drawings:

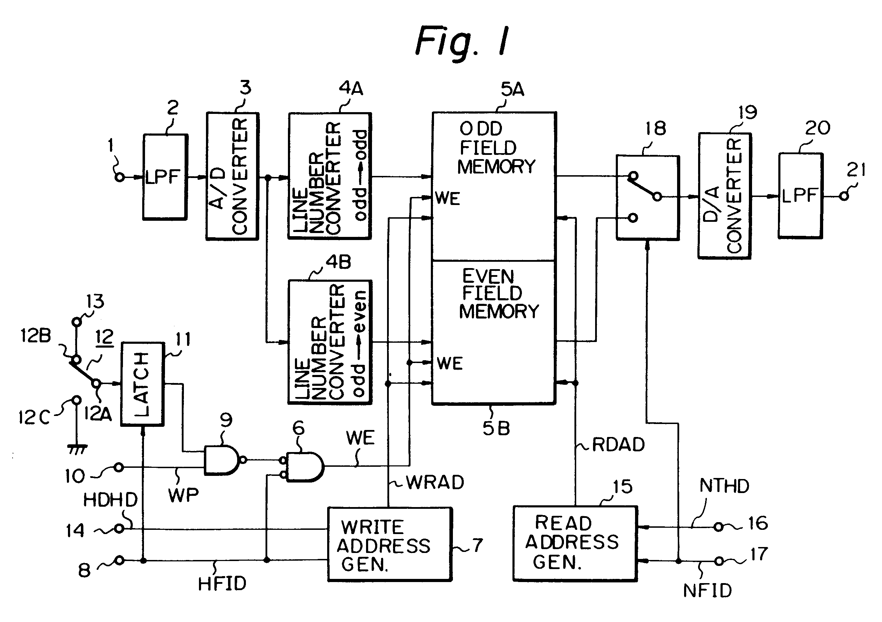

In Fig. 1, 1 shows an input terminal; a television signal of the HD standard is supplied to an A/D converter 3 through a low-pass filter 2 from the input terminal 1. The HD standard television signal is digitized at the A/D converter 3 and given to a line number converter 4A and a line number converter 4B.

The line number converters 4A and 4B are used for converting the lines of the HD standard into those of the NTSC standard. The line number converter 4A is constructed to develop a picture of the same field in the NTSC standard signal as that in the HD standard signal. Namely, in the line number converter 4A, a picture of an odd field in the NTSC standard signal is developed from that of an odd field in the HD standard signal. Further, in the line number converter 4B, a picture of an even field in the NTSC standard signal is developed from that of the odd field in the HD standard signal. Since the number of lines in the HD standard is equal to or larger than twice that of the NTSC standard, it is possible to form the pictures of an odd field and an even field in the NTSC standard based on data of one field in the HD standard.

That is, the ratio of the line number of the HD standard to that of the NTSC standard is 15:7 (1125:525). For this reason, by developing seven lines in the NTSC standard from fifteen lines in the HD standard using an interpolation filter, the conversion of the 1125 lines in the HD standard into the 525 lines in the NTSC standard can be attained.

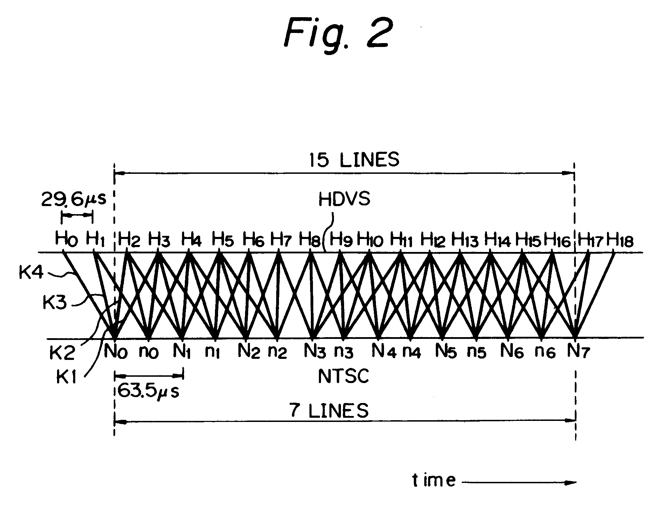

In Fig. 2, H_{O}, H₁, H₂, ... show respective lines in the HD standard, and N_{O}, N₁, N₂, ... show respective lines in the NTSC standard. The time interval between adjacent lines in the HD standard is 29.6 µsec, whereas the time interval between adjacent lines in the NTSC standard is 63.5 µsec. The line N₀ in the NTSC standard is developed from the four lines close in time in the HD standard. Clearly, the development of the line N₀ in the NTSC standard from the four lines H₀, H₁, H₂ and H₃ in the HD standard is made by multiplying coefficients K₄, K₃, K₂ and K₁ having values appropriate to achieve the required interpolation filter function by the four lines H₀, H₁, H₂ and H₃, respectively, and taking the sum of those multiplied results. In a similar way, the lines N₁, N₂ and N₃ in the NTSC standard are developed by the four lines H₂ ∼ H₅, H₄ ∼ H₇, H₇ ∼ H₁₀ ... close in time in the HD standard, respectively. As a result, the seven lines N₁ ∼ N₇ in the NTSC system are formed among the fifteen lines H₂ ∼ H₁₆ in the HD standard.

It is to be noted that a picture of an odd field and a picture of an even field in the NTSC standard can be developed on the basis of a picture of one field in the HD standard.

Assuming now that the respective lines N₁, N₂, N₃ ... in the NTSC standard obtained in the above-mentioned manner belong to an odd field in the NTSC standard, respective lines n₀, n₁, n₂ .. of an even field in the NTSC standard are positioned betwen the adjacent lines N₀, N₁, N₂ ... of the odd field in the NTSC standard. These respective lines n₀, n₁, n₂ .. of the even field in the NTSC standard can be obtained from data of the respective lines H₁, H₂, H₃ ... in the HD standard. The line n₀ can be developed by multiplying appropriately valued coefficients by the data of the four lines H₁, H₂, H₃ and H₄ in the HD standard close to the line n₀ and adding up the multiplied results. The development of the line n₁ can be made by multiplying the data of the four lines H₃, H₄, H₅ and H₆ in the HD standard close to the line n₁ by appropriately valued coefficients and adding the multiplied results. Similarly, the respective lines n₂, n₃, n₄ ... of the even field can be formed by multiplying the data of four lines in the HD system close to each line in the NTSC standard by appropriately valued coefficients and adding these multiplied results.

The outputs of the line number converters 4A and 4B are supplied to field memories 5A and 5B, respectively. A write-enable signal WE is given from an AND gate 6 to the field memories 5A and 5B. When the write-enable signal WE is at its high logic-level, data can be written into the field memories 5A and 5B, so while the write-enable signal is at a high level, the outputs of the line number converters 4A and 4B are written into the field memories 5A and 5B, respectively, at a write address determined by a write address signal WRAD generated by a write-address generating circuit 7. A field discrimination signal HFID of the HD standard given from a terminal 8 is fed in inverted form to one input terminal of the AND gate 6. The field discrimination signal HFID is brought to a low level in an odd field of a television signal of the HD standard and to a high level in an even field in that standard. The output of an NAND gate 9 is inverted to be supplied to another input of the AND gate 6. A write-in pulse WP is given from a terminal 10 to one input terminal of the NAND gate 9. To another input terminal of the NAND gate 9 is supplied the output of a switch 12 through a latch circuit 11. With the connection of a terminal 12A and a terminal 12C of the switch 12, a high level is given from a terminal 13 through the latch circuit 11 to the other input terminal of the NAND gate 9, while by the connection of the terminal 12A and the terminal 12C of the switch 12, a low level is fed to the other input terminal of the NAND gate 9 via the latch circuit 11.

To write into the field memories 5A and 5B, the terminal 12A and a terminal 12B of the switch 12 are connected and a high level given to the other input terminal of the NAND gate 9. With the high-level write-in pulse WP supplied from the terminal 10, the output of the NAND gate 9 takes a low level. Since the output of the NAND gate 9 assumes a low level, the write-enable signal WE output from the AND gate 6 takes a high level for an odd field, in which the field discrimination signal HFID is kept at a low level.

As a result, the field memories 5A and 5B are brought into a state in which a write-in operation is possible for an odd field of a television signal in the HD standard. Data of an odd field in the NTSC standard are output from the line number converter 4A when a television signal of the HD standard is in an odd field. Data of an even field in the NTSC standard, which have been developed from the odd field in the HD standard, are output from the line number converter 4B when the television signal of the HD standard is in the odd field.

A horizontal synchronization signal HDHD of the HD standard and the field discrimination signal HFID of the HD standard are supplied to the write-address generating circuit 7 from a terminal 14 and the terminal 8, respectively. By the write address WRAD produced from the write-address generating circuit 7, the data of the odd field of the NTSC standard, which have been developed by the odd field of the television signal of the HD standard are written into the field memory 5A, whereas the data of the even field in the NTSC standard, which have been developed from the odd field of the television signal of the HD standard, are written into the field memory 5B.

The outputs of the field memories 5A and 5B are read out by a read address RDAD output from a read-address generating circuit 15. A horizontal synchronization signal NTHD of the NTSC standard and a field discrimination signal NFID of the NTSC standard are supplied to the read-address generating circuit 15 from terminals 16 and 17, respectively.

The outputs of the field memories 5A and 5B are fed to a switch circuit 18. The field discrimination signal of the NTSC standard is given from the terminal 17 to the switch circuit 18 so that the switch circuit 18 may be switched every field of the NTSC standard. The outputs of the field memories 5A and 5B are consequently supplied through the switch circuit 18 to a D/A converter 19 alternatively every field of the NTSC standard. Conversion of a digital signal into an analog signal is made at the D/A converter 19, and the output of the D/A converter 19 is taken out of an output terminal 21 via a low-pass filter 20.

To reproduce a still picture, the terminals 12A and 12C of the switch 12 are connected, and the data of an odd field in the NTSC standard, which have been developed from a picture of an odd field in the HD standard and the data of an even field in the NTSC standard, which have been developed from a picture of the odd field in the HD standard are stored in the field memories 5A and 5B, respectively. With the connection of the terminals 12A and 12C of the switch 12, the write-enable signal WE output from the AND gate 6 takes a low level. As a result, the data, which have been stored in the field memories 5A and 5B, are continuously read out to reproduce the still picture.

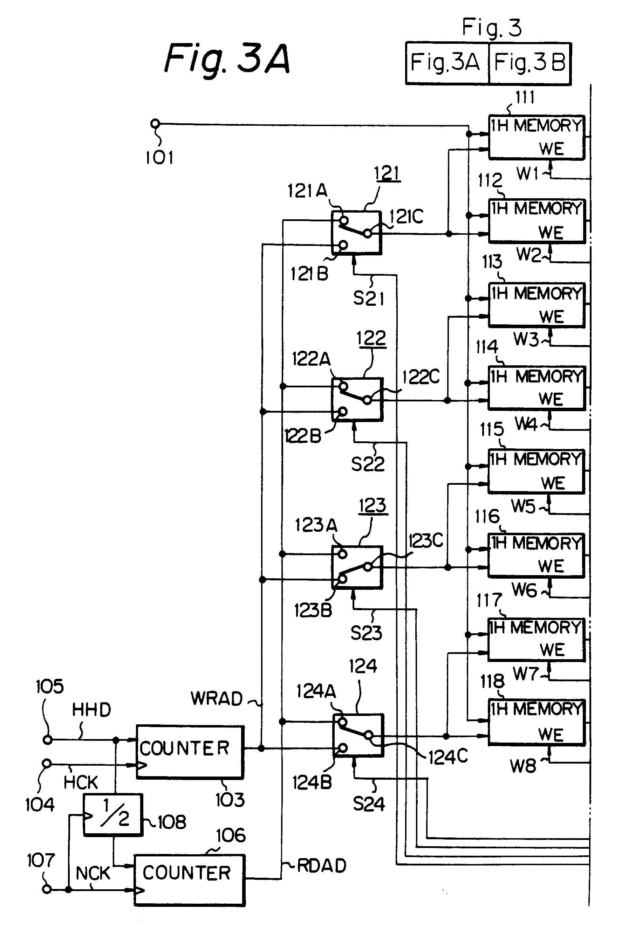

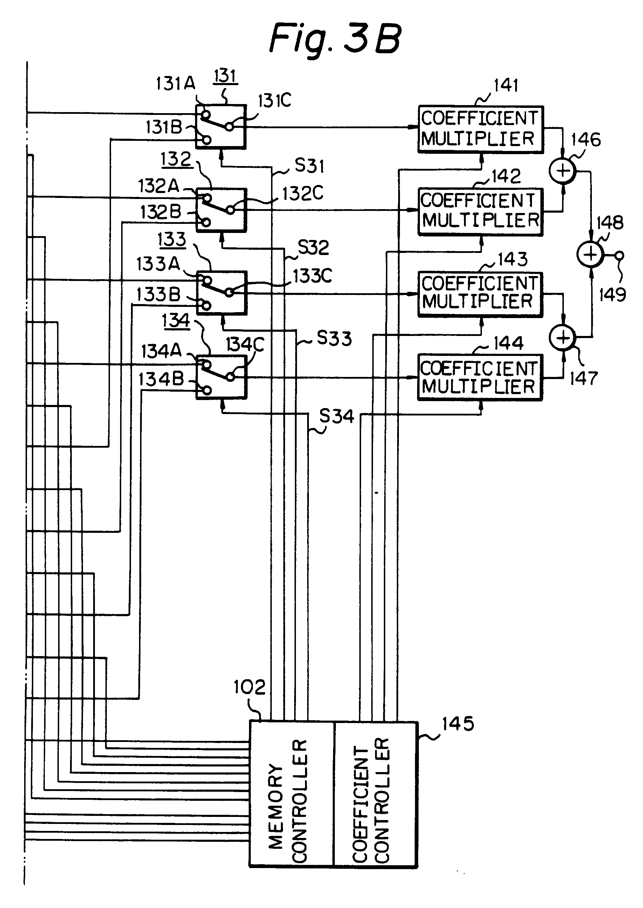

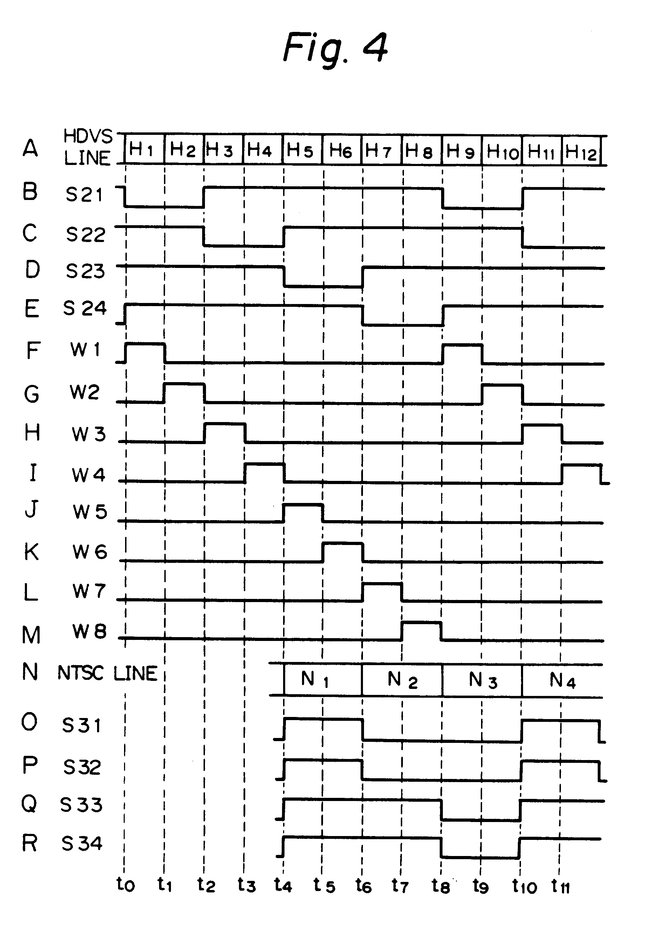

One example of the line number converters 4A and 4B will be described next with reference to Fig. 3. In Fig. 3, a digital video signal of the HD standard is inputted to an input terminal 101. The video signal is then supplied to 1H memories (i.e. one horizontal interval memories) 111 to 118 via the input terminal 101. To the 1H memories 111 to 118 are supplied write-enable signals W1 to W8, respectively as shown at F to M of Fig. 4. In response to the corresponding write-enable signals W1 to W8 having a high level, each of the memories 111 to 118 is brought into a write-enable state. A counter 103 generates a write address WRAD for the memories 111 through 118. A sampling clock HCK of the video signal in the HD standard is given through a terminal 104 to a clock input terminal of the counter 103. Data of the counter 103 are incremented by the sampling clock HCK. A synchronization signal HHD of the video signal of the HD standard is fed from a terminal 105 to a reset terminal of the counter 103 so as to reset the counter 103. The write address WRAD generated from the counter 103 is incremented every synchronization interval of the video signal of the HD standard by the sampling clock HCK of the video signal in the HD standard.

A counter 106 generates a read address RDAD for the memories 111 to 118. To a clock input terminal of the counter 106 is supplied a sampling clock NCK of a video signal of the NTSC standard from a terminal 107. The NCK clock may have a frequency of 4fsc (where fsc is a color subcarrier frequency), for instance. Data in the counter 106 are incremented by the sampling clock NCK of the video signal in the NTSC standard. The synchronization signal HHD of the video signal of the HD standard is given to a reset terminal of the counter 106 through a 1/2 demultiplier 108. The sampling clock NCK of the video signal in the NTSC standard is fed to the 1/2 demultiplier 108 so that the synchronization signal HHD given via the 1/2 demultiplier 108 and said sampling clock NCK are synchronized. The data of the counter 106 are reset with the synchronization HHD of the video signal in the HD standard given via the 1/2 demultiplier 108. As a result, the read address RDAD is incremented by the sampling clock NCK of the video signal of the NTSC standard every two lines of the video signal of the HD standard.

The write address WRAD generated from the counter 103 and the read address RDAD given from the counter 106 are supplied to the memories 111 to 118 through switch circuits 121 to 124. Switch control signals S21 to S24 are given from a memory controller 102 to the switch circuits 121 to 124 as shown at B to E of Fig. 4. The switch circuits 121 to 124 are controlled by the switch control signals S21 to S24. As a result, the write address WRAD and the read address RDAD are selectively supplied to the memories 111 and 112, the memories 113 and 114, the memories 115 and 116, and the memories 117 and 118, respectively.

The outputs of the memories 111 to 114 are given to one set of input terminals 131A to 134A of the switch circuits 131 to 134, respectively, while the outputs of the memories 115 to 118 are fed to the other input terminals 131B to 134B of the switch circuits 131 to 134, respectively. To the switch circuits 131 to 134 are supplied switch control signals S31 to S34 from the memory controller 102 as shown at O to R of Fig. 4, respectively. The outputs of the memories 111 to 114 are selected by the switch circuits 131 to 134 to be given to coefficient multipliers 141 to 144, respectively. Predetermined coefficients depending on the outputs of the memories 111 to 118, which have been selected by the switch circuits 131 to 134, are given from a coefficient controller 145 to the coefficient multipliers 141 to 144, and multiplied by the outputs of the switch circuits 131 to 134 therein.

The outputs of the multipliers 141 and 142 are supplied to an adder 146, and the outputs of the multipliers 143 and 144 are given to an adder 147. The outputs of the adders 146 and 147 are supplied to an adder 148 with an output 149.

The operation of the above-mentioned line number converters will be described referring to Figs. 3 to 5.

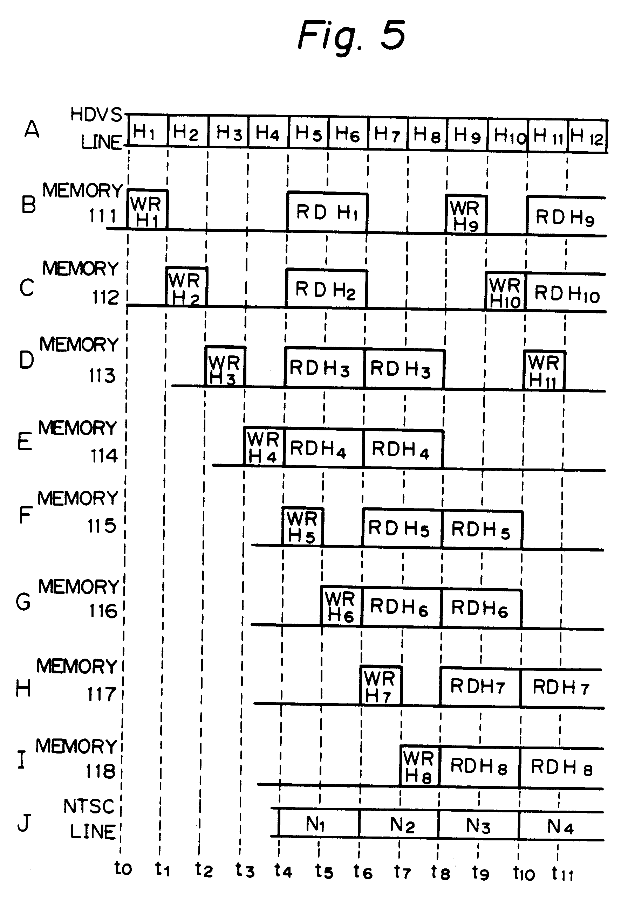

Fig. 4 shows the states of the switch control signals S21 to S24, the write-enable signals W1 to W8 and the switch control signals S31 to S34 in each of lines H₁, H₂, H₃, ... of a video signal of the HD standard. Also, the operation states of the memories 111 to 118 in each of the lines H₁, H₂, H₃, ... are shown at B to J of Fig. 5.

At time points t₀ to t₂, the switch control signal S21 takes a low level, and the switch control signals S22, S23 and S24 assume a high level as shown at B to E of Fig. 4. For this reason, in the switch circuits 121 to 124, a terminal 121C of the switch circuit 121 is connected to a terminal 121B, and terminals 122C, 123C and 124C of the switch circuits 122, 123 and 124 are connected to terminals 122A, 123A and 124A, respectively. As a result, the write address WRAD is supplied to the memories 111 and 112 from the counter 103, while the read address RDAD is given from the counter 106 to the memories 113 and 114, the memories 115 and 116, and the memories 117 and 118.

On the other hand, to the memories 111 to 118 are supplied the write-enable signals W1 to W8 as indicated at F to M of Fig. 4. At the time points t₀ to t₁, the write-enable signal W1 is brought into a high level, and the write-enable signal W2 takes a high level at the time points t₁ to t₂. The memory 111 is brought into a write-enable state at the time points t₀ to t₁, and at the time points t₁ to t₂ the memory 112 assumes a write-enable state.
Consequently, as indicated at B of Fig. 5, the video signal of the line H₁ of the HD standard is written into the memory 111 by the write address WRAD at the time points t₀ to t₁, while at the time points t₁ to t₂, the video signal of the line H₂ of the HD standard is written into the memory 112 by the write address WRAD.

At time points t₂ to t₄, the switch control signal S22 takes a low level, and the switch control signals S21, S23 and S24 assume a high level. At the time point t₂ to t₃, the write-enable signal W3 has a high level, and the write-enable signal W4 takes a high level at the time points t₃ to t₄. Accordingly, as indicated at D and E of Fig. 5, the video signal of the line H₃ of the HD standard is written into the memory 113 by the write address WRAD at the time points t₂ to t₃, while at the time points t₃ to t₄, the video signal of the line H₄ of the HD standard is written into the memory 114 by the write address WRAD.

At time points t₄ to t₆, the switch control signal S23 takes a low level, whereas the switch control signals S21, S22 and S24 assume a high level. At the time points t₄ to t₅ the write-enable signal W5 has a high level, and the write-enable signal W6 takes a high level at the time points t₅ to t₆ As a result, as indicated at F and G of Fig. 5, the video signal of the line H₅ of the HD standard is written into the memory 115 by the write address WRAD at the time points t₄ to t₅, and the video signal of the line H₆ of the HD standard is written into the memory 116 by the write address WRAD at the time points t₅ to t₆.

Also, since at the time points t₄ to t₆ the switch control signal S21, S22 and S24 are brought to a high level and since the terminals 121A, 122A and 124A of the switch circuits 121, 122 and 124 are connected to the terminals 121C, 122C and 124C thereof, respectively, the read address RDAD is supplied to the memories 111 and 112, the memories 113 and 114 and the memories 117 and 118. The switch control signals S31 to S34 are then brought a high level as shown at O to R of Fig. 4 so that the terminals 131A, 132A, 133A and 134A of the switch circuits 131, 132, 133 and 134 are connected to the terminals 131C, 132C, 133C and 134C thereof, respectively. For this reason, the video signals of the lines H₁, H₂, H₃ and H₄ of the HD standard, which have been written into the memories 111 to 114, are read out by the read address RDAD as indicated at B to E of Fig. 5, and given to the coefficient multipliers 141, 142, 143 and 144, respectively. Those video signals of the lines H₁ to H of the HD standard are consequently multiplied by appropriately valued coefficients, summed up and taken out from an output terminal 149 as a video signal of the line N₁ in the NTSC standard.

As mentioned above, the read address RDAD for the memories 111 to 118 is incremented with the sampling clock NCK of a video signal in the NTSC standard. Therefore, the video signal of each line in the NTSC standard to be taken out from the output terminal 149 is used for the sampling frequency of the video signal in the NTSC standard.

At the points t₆ to t₈, the switch control signal S24 takes a low level, whereas the switch control signals S21, S22 and S23 have a high level. At the time points t₆ to t₇, the write-enable signal W7 assumes a high level, while at the time points t₇ to t₈ to the write-enable signal W8 takes a high level. As a result, the video signal of the line H₇ of the HD standard is written into the memory 117 by the write address WRAD at the time points t₆ to t₇, and the video signal of the line H₈ of the HD standard is written into the memory 118 by the write address WRAD at the time points t₇ to t₈.

In addition, at the time points t₆ to t₇, the read address RDAD is supplied to the memories 111 and 112, the memories 113 and 114 and the memories 115 and 116. As shown at O to R of Fig. 4, the switch control signals S31 and S32 are brought to a low level, whereas the switch control signals S33 and S34 are brought to a high level. Consequently, the terminals 131B and 132B of the switch circuits 131 and 132 are connected to the terminals 131C and 132C thereof, respectively, and the terminals 133A and 134A of the switch circuits 133 and 134 are connected to the terminals 133C and 134C thereof, respectively. As a result, the video signals of the lines H₃, H₄, H₅ and H₆ in the HD standard, which have been written into the memories 113 to 116 as shown at D to G of Fig. 5, are read out by the read address RDAD, and supplied to the coefficient multipliers 141, 142, 143 and 144. The coefficients of the multipliers 141 to 144 are optimally set every line. Thus, the video signal of a line N₂ of the NTSC standard, which is formed of the video signals of the lines H₃ to H₆ in the NTSC standard, is output from the output terminal 149.

At time points t₆ to t₈, the video signals of the lines H₁ to H₆ in the HD standard have been written into the memories 111 to 116. Therefore, at the time points t₆ to t₈, it is possible to develop one line of the NTSC standard from the lines H₁ to H₄ by connecting the terminals 131A, 132A, 133A and 134A of the switch circuits 131 to 134 to the terminals 131C, 132C, 133C and 134C thereof, respectively. Also, by the connection of the terminals 131A, 132A, 133A and 134A of the switch circuits 131 to 134 to the terminals 131C, 132C, 133C and 134C, one line of the NTSC standard can be developed out of the lines H₂ to H₅.

Similarly, at time points t₈ to t₉, the video signal of the line H₉ in the HD standard is written into the memory 111, and at time points t₉ to t₁₀ the video signal of the line H₁₀ is written into the memory 112. At this time, the video signals of the lines H₅ to H₈ in the HD standard are read out from the memories 115 to 118 and supplied to the coefficient multipliers 141 to 144, respectively. Consequently, the video signal of a line N₃ of the NTSC standard, which is formed of the lines H₅ to H₈ in the HD standard is produced from the output terminal 149. The ratio between the line number of a video signal of the HD standard and that of a video signal of the NTSC standard is (15:7) less than (2:1). For this reason, one line of the video signal in the NTSC standard can be formed for the two-line duration of the video signal of the HD standard. In this example, the video signal of one line of the HD standard is written into the memories 111 to 118 by the write address WRAD, which is incremented with the sampling clock for the video signal of the HD standard. The video signal of one line written in the memories 111 to 118 is read out for the two-line duration by the read address RDAD, which is incremented with the sampling clock for the video signal of the NTSC standard. The two-line duration of the video signal of the HD standard is (29.6 µsec x 2 = 59.2 µsec). For this reason, assuming that the sampling frequency of the video signal of the NTSC standard is 4 fsc, the clock period becomes 70nsec to enable 848 samples to be read. As a result, samples of more than 760, which is the effective sample number of the video signal in the NTSC standard, can be taken out.

In this manner, the line number conversion for reducing the line number to 1/2 can be done by reading out one line of the video signal of the HD standard for the two-line duration of the HD standard. By thinning out unnecessary outputs among the outputs converted to 1/2 in line number, the line number conversion for converting the line number to 7/15 can be attained. It is to be noted that the outputs do not become continuous. For this reason, it is required that the thinned-out outputs are once stored in the frame memory and rearranged to be continuous data.

Next, another example of the line number converters will be described.

With respect to the switch circuits 121 to 124 for selecting the read address RDAD and the write address WRAD for the memories 111 to 118, eight switch circuits may be provided for the eight memories 111 to 118. In this example, the read address RDAD and the write address WRAD are supplied in common to the memories 111 and 112, the memories 113 and 114, the memories 115 and 116 and the memories 117 and 118 into which video signals of adjacent lines are written. As a result, the switch circuits are reduced to the four switch circuits 121 to 124 for selecting one of read address RDAD and the write address WRAD supplied to the memories 111 to 118 to achieve the miniaturization of hardware.

Namely, since the reading operation is simultaneously performed for adjacent lines for the two-line duration of the video signal of the HD standard, the read address RDAD can be supplied in common to the 1H memories in which the adjacent-line video signals are written. At the time of writing, the control can be made so that the write-in operation is carried out for one-sided 1H memories by the write-enable signals W1 to W8.

In this manner, the line number conversion for reducing the line number to 1/2 can be done by reading out one line of the video signal of the HD standard for the two-line duration of the HD standard. By thinning out unnecessary outputs from the outputs converted to 1/2 the number of lines, a conversion of the number of lines to 7/15 can be attained.

Additionally, for the switch circuits 131 to 134 for selecting the outputs read out of the memories 111 to 118, eight switch circuits may be provided for those memories. In this example, by selecting the outputs of the memories 111 and 115, the memories 112 and 116, the memories 113 and 117, and the memories 114 and 118 in which video signals of lines distant from each other are written, by the use of the switch circuits 131, 132, 133 and 134, the outputs of continuous lines are obtained from the four switch circuits 131 to 134. This achieves the reduction of the number of the switch circuits used to simplify the whole hardware.

In the above-mentioned embodiment, the odd field and the even field of the NTSC standard are developed from an odd field of the HD standard and stored into the field memories 5A and 5B. However, the odd and even fields of the NTSC standard may be developed from an even field of the HD standard and stored into the field memories 5A and 5B.

In addition, although description has been made on the case of the conversion of a television signal to the NTSC standard from the HD standard in the above described embodiment, the invention can be applied similarly to the case of the conversion of a television signal of the HD standard into that of the PAL standard. Equally, the invention is not limited to the case where the television signal to be converted is of the particular type currently known as the 'HD' (1125-line) type but is equally applicable to other television signals to be converted to another standard and which comprise odd and even fields.

According to the invention, a picture of an odd field and a picture of an even field in the NTSC standard are developed from, for example, an odd field in the HD standard and read out consecutively to reproduce a still picture. In this way, since the reproduction of the still picture is made using one frame data of an odd field and an even field in the NTSC standard, a distinct picture can be reproduced. Also, because the odd and even fields of the NTSC standard are developed from one field of the HD standard, double images are not reproduced even if a picture movement occurs.

## Claims

1. A standard converting apparatus for generating, from a first video signal which accords to a first television standard, a second video signal which accords to a second television standard and represents a still image, wherein the number of lines within one field of said first television standard is more than twice the number of lines within one field of said second television standard, characterised in that said converting apparatus comprises:
first line number conversion means (4A) supplied with either an odd or an even field of the first video signal for generating an odd-field video signal according to the second television standard;
second line number conversion means (4B) supplied with the same field of the first video signal as said first line number converting means for generating an even-field video signal according to the second television standard;
first memory means (5A) for storing an output of said first line number conversion means (4A);
second memory means (5B) storing an output of said second line number conversion means (4B); and
memory control means (7, 15) for controlling write and read operations of said first and second memory means (5A, 5B) so that the video signals stored in said first and second memory means (5A, 5B) are sequentially read out.

2. A standard converting apparatus according to claim 1, wherein said memory control means (7,15) includes write address generating means controlled by a synchronizing signal (HDHD) and a field identifying signal (HFID) of the first video signal according to said first television standard and read address generating means (15) controlled by a synchronizing signal (NTHD, NFID) and a field identifying signal of the video signal according to said second television standard.

3. A standard converting apparatus according to claim 1 or 2, wherein said first television standard is HD (1125 lines) and said second television standard is PAL.

4. A standard converting apparatus according to any one of the preceding claims, wherein each of said first and second line number conversion means (4A, 4B) includes an interpolating filter (Figs. 3A, 3B) having plural delay circuits (111-118, 102) for delaying a given signal for the duration of one line of said first television standard.

5. A standard converting apparatus according to any one of the preceding claims, wherein said memory control means includes write-enable signal generating means (103) for generating a write-enable signal supplied to write-enable terminals of said first and second memory means (5A, 5B).

6. A standard converting apparatus according to any one of the preceding claims, wherein said memory control means (7, 15) includes selecting means (18) for selecting one of outputs read out from said first and second memory means (5A, 5B).

## Patentansprüche

1. Normumsetzungsvorrichtung zur Erzeugung aus einem ersten Videosignal, das in Einklang mit einer ersten Fernsehnorm steht, ein zweites Videosignal, das in Einklang mit einer zweiten Fernsehnorm steht und ein Standbild darstellt, wobei die Anzahl der Zeilen innerhalb eines Teilbildes der ersten Fernsehnorm mehr als zweimal so groß wie die Anzahl der Zeilen innerhalb eines Teilbildes der zweiten Fernsehnorm ist,
**dadurch gekennzeichnet**,
daß die Umsetzungsvorrichtung umfaßt:
erste Zeilenzahlumwandlungsmittel (4A), die durch entweder ein ungeradzahliges oder ein geradzahliges Teilbild des ersten Videosignals zur Erzeugung eines Videosignals mit einem ungeradzahligen Teilbild nach der zweiten Fernsehnorm versorgt werden;
zweite Zeilenzahlumwandlungsmittel (4B), die mit dem gleichen Teilbild des ersten Videosignals wie die ersten Zeilenzahlumwandlungsmittel versorgt werden, um ein Videosignal mit einem geradzahligen Teilbild nach der zweiten Fernsehnorm zu erzeugen;
erste Speichermittel (5A) zur Speicherung eines Ausgangssignals der ersten Zeilenzahlumwandlungsmittel (4A);
zweite Speichermittel (5B) zur Speicherung eines Ausgangssignals der zweiten Zeilenzahlumwandlungsmittel (4B); und
Speichersteuermittel (7,15) zur Steuerung des Schreib- und Lesebetriebs der ersten und zweiten Speichermittel (5A,5B), so daß die Videosignale, die in den ersten und zweiten Speichermitteln (5A,5B) gespeichert sind, nacheinander ausgelesen werden.

2. Normumsetzungsvorrichtung nach Anspruch 1, wobei die Speichersteuermittel (7,15) Erzeugungsmittel für die Schreibadresse umfassen, die durch ein Synchronisationssignal (HDHD) und ein Teilbildidentifikationssignal (HFID) des ersten Videosignals nach der ersten Fernsehnorm gesteuert werden, sowie Erzeugungsmittel (15) für die Leseadresse umfassen, die durch ein Synchronisationssignal (NTHD, NFID) und ein Teilbildidentifikationssignal des Videosignals nach der zweiten Fernsehnorm gesteuert werden.

3. Normumsetzungsvorrichtung nach Anspruch 1 oder 2, wobei die erste Fernsehnorm HD (1125 Zeilen) und die zweite Fernsehnorm PAL ist.

4. Normumsetzungsvorrichtung nach einem der vorhergehenden Ansprüche, wobei die ersten und zweiten Zeilenzahlumsetzungsmittel (4A,4B) ein Interpolationsfilter (Fig.3A,3B) umfassen, das eine Vielzahl von Verzögerungsschaltungen (111-118,102) zur Verzögerung eines gegebenen Signals für die Dauer einer Zeile der ersten Fernsehnorm hat.

5. Normumsetzungsvorrichtung nach einen der vorhergehenden Ansprüche, wobei die Speichersteuermittel Schreibermöglichungssignalerzeugungsmittel (103) zur Erzeugung eines Schreibermöglichungssignals umfassen, das zu den Schreibermöglichungsanschlüssen der ersten und zweiten Speichermittel (5A,5B) geliefert wird.

6. Normumsetzungsvorrichtung nach einen der vorhergehenden Ansprüche, wobei die Speichersteuermittel (7,15) Auswahlmittel (18) umfassen, um eines der Leseausgangssignale von den ersten und zweiten Speichermitteln (5A,5B) auszuwählen.

## Revendications

1. Dispositif convertisseur de standard de définition pour engendrer, à partir d'un premier signal vidéo qui est conforme à un premier standard de définition de télévision, un second signal vidéo qui est conforme à un second standard de définition de télévision et représente une image fixe, où le nombre de lignes dans une trame dudit premier standard de définition de télévision est égal à plus du double du nombre de lignes dans une trame dudit second standard de définition de télévision, caractérisé en ce que ledit convertisseur comprend:
un premier moyen convertisseur de nombre de lignes (4A) recevant une trame impaire ou une trame paire du premier signal vidéo pour engendrer un signal vidéo de trame impaire suivant le second standard de définition de télévision;
un second moyen convertisseur de nombre de lignes (4B) recevant la même trame du premier signal vidéo que ledit premier moyen convertisseur de nombre de lignes pour engendrer un signal vidéo de trame paire suivant le second standard de définition de télévision;
un premier moyen de mémoire (5A) pour mémoriser le signal de sortie dudit premier moyen convertisseur de nombre de lignes (4A);
un second moyen de mémoire (5B) pour mémoriser le signal de sortie dudit second moyen convertisseur de nombre de lignes (4B); et
un moyen de commande de mémoire (7,15) pour commander des opérations d'écriture et de lecture desdits premier et second moyens de mémoire (5A,5B), de telle sorte que les signaux vidéo mémorisés dans lesdits premier et second moyens de mémoire (5A,5B) sont lus séquentiellement.

2. Dispositif convertisseur de standard de définition selon la revendication 1, dans lequel ledit moyen de commande de mémoire (7,15) comprend un moyen générateur d'adresse d'écriture commandé par un signal de synchronisation (HDHD) et un signal d'identification de trame (HFID) du premier signal vidéo suivant ledit premier standard de définition de télévision et un moyen générateur d'adresse de lecture (15) commandé par un signal de synchronisation (NTHD) et un signal d'identification de trame (NFID) du signal vidéo suivant ledit second standard de définition de télévision.

3. Dispositif convertisseur de standard de définition selon l'une quelconque des revendications 1 et 2, dans lequel ledit premier standard de définition de télévision est le standard de haute définition HD (1125 lignes) et ledit second standard de définition de télévision est le standard PAL.

4. Dispositif convertisseur de standard de définition selon l'une quelconque des revendications 1 à 3, dans lequel chacun desdits premier et second moyens convertisseurs de nombre de lignes (4A,4B) comprend un filtre d'interpolation (Figures 3A,3B) comportant plusieurs circuits à retard (111-118,102) pour retarder un signal donné pendant la durée d'une ligne dudit premier standard de définition de télévision.

5. Dispositif convertisseur de standard de définition selon l'une quelconque des revendications 1 à 4, dans lequel ledit moyen de commande de mémoire comprend un moyen générateur de signaux de validation d'écriture (103) pour engendrer un signal de validation d'écriture fourni à des bornes de validation d'écriture desdits premier et second moyens de mémoire (5A,5B).

6. Dispositif convertisseur de standard de définition selon l'une quelconque des revendications 1 à 5, dans lequel ledit moyen de commande de mémoire (7,15) comprend un moyen sélecteur (18) pour sélectionner un des signaux de sortie lus dans lesdits premier et second moyens de mémoire (5A,5B).
